# FASCICULE DE BREVET EUROPEEN

(11) **EP 2 604 089 B1**
(45) Date de publication et mention de la délivrance du brevet: **05.12.2018**
(21) Numéro de dépôt: 11730690.2
(22) Date de dépôt: 12.07.2011
(51) Int. Cl.: H05B 3/50, H05B 3/26, F24H 3/00

(54) **MODULE CHAUFFANT COMPRENANT UN ELEMENT CHAUFFANT SERIGRAPHIE**
HEIZMODUL MIT SIEBDRUCKHEIZAGGREGAT
HEATING MODULE COMPRISING A SCREEN-PRINTED HEATING ELEMENT

(30) Priorité: 11.08.2010 FR 1003339
(43) Date de publication de la demande: 19.06.2013
(73) Titulaire: Valeo Systemes Thermiques, 78320 Le Mesnil Saint Denis (FR)
(72) Inventeur: PIERRON, Frédéric, F-78120 Rambouillet (FR); TELLIER, Laurent, F-75116 Paris (FR)
(74) Mandataire: Metz, Gaëlle
(86) Numéro de dépôt international: PCT/EP2011/061896
(87) Numéro de publication internationale: WO 2012/019855

(56) Documents cités:
- EP-A1- 0 572 340
- EP-A1- 1 768 458
- WO-A1-2006/065059
- WO-A1-2007/139328
- US-A1- 2002 127 035
- US-A1- 2005 269 749

## Description

Le secteur technique de la présente invention est celui des dispositifs ou radiateurs de chauffage électrique équipant une installation de ventilation, chauffage et/ou climatisation d'un véhicule automobile. Ces dispositifs chauffent un flux d'air qui circule dans cette installation et l'invention vise plus particulièrement un module chauffant constitutif d'un tel radiateur.

Les véhicules automobiles sont aujourd'hui couramment équipés d'un radiateur électrique de chauffage dont la fonction est de fournir des calories au flux d'air envoyé dans l'habitacle du véhicule par l'installation de ventilation, chauffage et/ou climatisation. Le chauffage de ce flux d'air est principalement assuré par un radiateur classique traversé par un fluide caloporteur dont la mise en température est dépendante de la température d'un moteur à combustion équipant le véhicule. Cependant, les moteurs à combustion interne sont de plus en plus efficaces et leur montée en température devient de plus en plus lente.

En parallèle, le confort de l'utilisateur du véhicule impose une montée en température de l'habitacle la plus rapide possible. Cette opposition de contraintes a amené les constructeurs d'installation de ventilation et chauffage à recourir à un radiateur électrique qui permet de chauffer très rapidement le flux d'air et ainsi atteindre le niveau de confort souhaité par l'utilisateur du véhicule.

Les radiateurs électriques connus de l'art antérieur utilisent un bloc de chauffe constitué d'une grande quantité de pièces telles que des pierres chauffantes, des ailettes de refroidissement, des ressorts de maintien, etc... Le bloc de chauffe ainsi constitué est maintenu dans un cadre. Une telle conception implique un grand nombre de pièces, des opérations d'assemblage complexes et l'intervention de plusieurs fabricants de pièces. On comprend donc que la complexité de conception et d'assemblage de tels radiateurs grèvent le coût de la fonction chauffage électrique. Il convient donc de trouver une nouvelle solution de chauffage électrique de réalisation et d'assemblage simples et dont le coût de fabrication est plus faible que les solutions de l'art antérieur.

Le dispositif selon WO 2007 / 139328 A1 comprend des éléments chauffants ayant une épaisseur importante, et dépourvu de dissipateurs dédiés, ce qui amoindrit l'efficacité du transfert thermique.

Le but de la présente invention est donc de résoudre les inconvénients décrits ci-dessus principalement en concevant un nouveau type de module chauffant utilisant un ou des éléments chauffants sérigraphiés sur un support qui échange avec le flux d'air traversant l'installation de ventilation et chauffage, le support étant orienté par rapport au flux d'air de telle sorte à recevoir un dissipateur thermique pour favoriser l'échange thermique entre le support et le flux d'air.

L'invention a donc pour objet un module chauffant pour radiateur électrique de chauffage équipant une installation de ventilation, chauffage et/ou climatisation d'un véhicule automobile, traversé par un flux d'air d'une installation de ventilation et chauffage, comprenant au moins un support présentant une première face qui s'étend dans un plan parallèle à une direction du flux d'air et sur laquelle est installé un élément chauffant, ledit module comprenant en outre au moins un dissipateur, caractérisé en ce que l'élément chauffant est sérigraphié sur ladite première face, et le dissipateur est solidarisé sur la première face du support qui reçoit l'élément chauffant sérigraphié.

De cette façon, le dissipateur thermique selon l'invention permet de conduire efficacement les calories générées par l'élément chauffant sérigraphié du support vers le dissipateur.

Les documents US 2002 / 127035 A1 et EP 0 572 340 A1 comprennent des éléments sérigraphiés mais ces derniers ne sont pas sur une face sur laquelle est fixé un dissipateur, ce qui ne permet pas d'optimiser le transfert thermique et de réduire l'épaisseur du module thermique.

Selon une première caractéristique de l'invention, le support est de forme rectangulaire, sa longueur étant comprise entre 50 et 300 mm, sa largeur étant comprise entre 8 et 60 mm et son épaisseur étant comprise entre 0,5 et 3 mm. On comprend donc qu'il s'agit d'une plaque de faible épaisseur et l'élément chauffant est reçu sur la ou les grandes faces de cette plaque.

Selon une deuxième caractéristique de l'invention, l'élément chauffant sérigraphié prend la forme d'une piste résistive d'épaisseur comprise entre 0,05 et 0,20 mm. Avantageusement, la piste résistive est conformée pour restituer 75 Watts par cm².

Selon une autre caractéristique de l'invention, la piste suit un profil crénelé. Ce profil est particulièrement avantageux car il permet de définir des zones de la première face dépourvues d'élément chauffant sérigraphié et contre lesquelles le dissipateur peut venir en appui pour y être soudé.

Selon encore une caractéristique de l'invention, le support présente une première extrémité et une seconde extrémité, l'une de ces extrémités recevant au moins une borne d'alimentation de l'élément chauffant sérigraphié. L'autre extrémité peut recevoir un talon en matière plastique moulé ou surmoulé sur cette extrémité,

Selon encore une autre caractéristique de l'invention, la borne d'alimentation prend la forme d'une extrémité de la piste sérigraphié.

Avantageusement, l'extrémité du support prend la forme ou comprend une excroissance sur laquelle est sérigraphiée la borne d'alimentation de l'élément chauffant sérigraphié. Cette excroissance peut ainsi servir de cosse de connexion entre le module chauffant et le composant extérieur qui l'alimente, par exemple un connecteur de puissance en provenance du réseau du véhicule ou un module de commande qui intègre la gestion de la puissance électrique ainsi que la gestion de la stratégie de commande du module chauffant.

Selon une variante, le premier dissipateur est solidarisé sur la première face du support qui reçoit l'élément chauffant sérigraphié et un second dissipateur est solidarisé sur une seconde face du support. On augmente ainsi la capacité de transfert calorifique du module chauffant vers le flux d'air.

La première face et la seconde face reçoivent chacune un élément chauffant sérigraphié. On augmente ainsi la puissance de chauffage disponible.

Selon une première caractéristique de l'invention, le premier et/ou le second dissipateur est brasé, collé ou sertit sur le support en des zones dépourvues d'éléments chauffants sérigraphiés. Avantageusement, ces zones sont formées par le support autour de la piste résistive formant l'élément chauffant sérigraphié.

L'invention couvre également un bloc de chauffe d'un radiateur électrique de chauffage traversé par un flux d'air d'une installation de ventilation et chauffage, qui comprend une pluralité de modules chauffants selon l'une quelconque des caractéristiques présentées ci-dessus.

Enfin, l'invention vise un radiateur électrique de chauffage traversé par un flux d'air d'une installation de ventilation et chauffage comprenant un bloc de chauffe décrit ci-dessus.

Un tout premier avantage selon l'invention réside dans la simplification de la conception du module chauffant tout en atteignant un haut niveau de performances. Cette simplification se traduit par un nombre de pièces notoirement inférieur au bloc de chauffe de l'art antérieur ce qui permet de mettre en place un procédé de fabrication comprenant un nombre d'étapes restreint, Cette simplification se traduit par un abaissement du coût de conception et de fabrication d'un tel module chauffant.

Un autre avantage résulte dans le gain en épaisseur de l'élément chauffant comparé aux solutions de l'art antérieur. En effet, ce gain permet, soit d'augmenter la puissance de chauffage disponible à isopérimètre, soit de réduire la largeur du bloc de chauffe et corrélativement du radiateur électrique de chauffage incorporant un tel bloc de chauffe ce qui facilite son intégration en des zones du boîtier de l'installation de ventilation et chauffage où dans l'art antérieur il n'était pas possible de le monter.

D'autres caractéristiques, détails et avantages de l'invention ressortiront plus clairement à la lecture de la description donnée ci-après à titre indicatif en relation avec des dessins dans lesquels :
- la figure 1 est une vue de face d'une première variante du module chauffant selon l'invention,
- la figure 2 est une vue de côté de la première variante du module chauffant selon l'invention,
- la figure 3 est une vue de face d'une deuxième variante du module chauffant selon l'invention,
- la figure 4 est une vue de côté de la deuxième variante du module chauffant selon l'invention,
- la figure 5 est une vue de face d'une troisième variante du module chauffant selon l'invention,
- la figure 6 est une vue de côté de la troisième variante du module chauffant selon l'invention,
- la figure 7 est une vue montrant les détails dimensionnels de l'élément chauffant,
- la figure 8 est une vue de face d'un bloc de chauffe équipé de modules chauffants selon la deuxième variante de l'invention,
- la figure 9 est une vue de face d'un bloc de chauffe équipé de modules chauffants selon la troisième variante de l'invention.

Il faut noter que les figures exposent l'invention de manière détaillée, lesdites figures peuvent bien entendu servir à mieux définir l'invention le cas échéant.

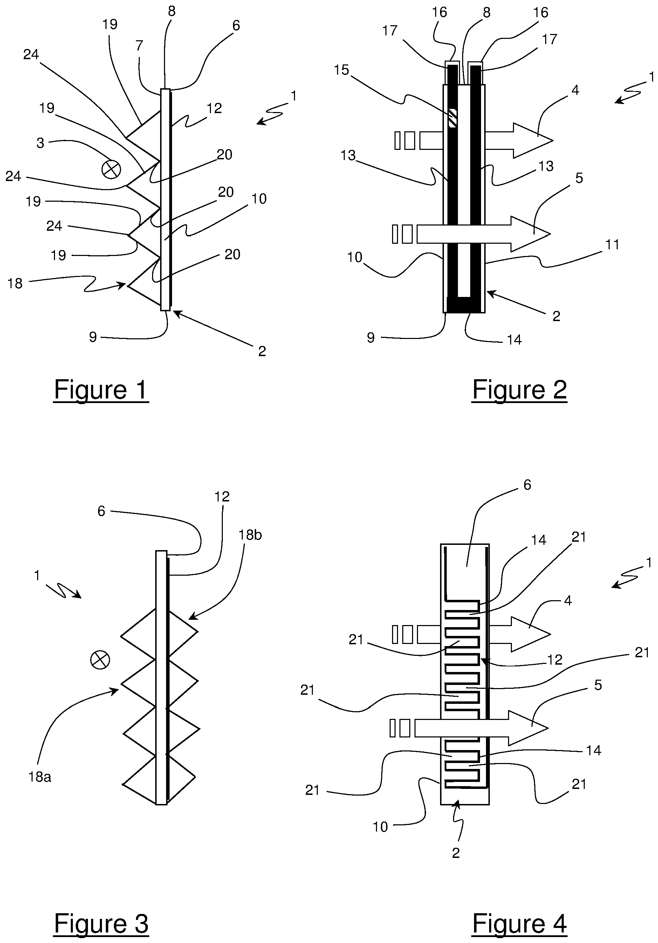

Les figures 1 et 2 illustrent un exemple de réalisation d'une première variante du module chauffant 1 selon l'invention. Ce dernier comprend un support 2 qui prend la forme par exemple d'une plaque rectangulaire, Le support 2 est avantageusement thermoconducteur en ce sens qu'il conduit les calories, Le matériau constituant ce support est par exemple un aluminium ou un alliage d'aluminium.

Le support 2 comprend une première face 6 et une seconde face 7, cette dernière étant opposée à la première face 6 par rapport à un axe central passant dans l'épaisseur du support 2. De manière préférentielle, la seconde face 7 s'étend dans un plan parallèle au plan dans lequel s'étend la première face 6. Le support 2 est délimité par une première extrémité 8 et une seconde extrémité 9 formées chacune par le bout du rectangle qui illustre le support 2. Le support 2 est encore délimité par un premier bord 10 et un second bord 11 qui s'étendent dans la longueur du rectangle formé par le support 2. Le premier bord 10, la seconde extrémité 9, le second bord 11 et la première extrémité 8 délimitent la périphérie extérieure du support 2,

Le flux d'air est illustré sur la figure 1 par l'élément 3 et par les flèches 4 et 5 sur la figure 2, ces dernières illustrant le passage du flux d'air de part et d'autre du support 2. On comprend ainsi que la direction du flux d'air est perpendiculaire au plan de la figure 1 et parallèle au plan de la figure 2. Le flux d'air lèche donc la première face 6 et la deuxième face 7 du support 2.

Dans cet exemple de réalisation, un élément chauffant 12 est installé sur la première face 6 du support 2. Cet élément chauffent 12 est sérigraphié sur ladite première face et forme ainsi une piste résistive qui chemine sur la première face 6. L'épaisseur de cette piste résistive est comprise entre 0,05 et 0,20 mm.

L'élément chauffant sérigraphié 12 présente un profil crénelé. Dans cet exemple de réalisation, le profil forme un « U » où deux branches 13 sont jointes par une base 14 perpendiculaire aux branches 13. Ces dernières s'étendent sur la première face 6 sensiblement parallèlement aux bords 10 ou 11 qui leur est adjacent alors que la base 14 est sensiblement parallèle à la seconde extrémité 9.

L'élément chauffant sérigraphié 12 peut comprendre une zone de coupure électrique 15. Cette dernière est également sérigraphiée sur le support 2 au niveau d'une branche 13 de l'élément chauffant sérigraphié 12. La zone de coupure 15 présente une fonction d'interruption du courant circulant dans l'élément chauffant en cas de surintensité résultant par exemple d'un court-circuit. En pratique, la zone de coupure 15 est formée par une partie de la piste résistive de l'élément chauffant sérigraphié 12 dont les dimensions sont réduites par rapport au reste de la piste résistive. A titre d'exemple, il s'agit d'une réduction de l'épaisseur ou de la largeur de la zone de coupure comparativement au reste de la piste de l'élément chauffant sérigraphié 12. Alternativement, cette zone de coupure peut être réalisée par un matériau différent du matériau constituant le reste de l'élément chauffant, ce matériau présentant un point de fusion à une température donnée inférieure au point de fusion du reste de la piste résistive.

Alternativement, la fonction d'interruption du courant est réalisée par un fusible soudé ou brasé sur la piste de l'élément chauffant sérigraphié ou par une soudure eutectique qui fait partie de la piste.

De manière complémentaire, l'invention prévoit de souder ou braser sur la piste de l'élément chauffant sérigraphié 10 des composants électroniques.

Dans un exemple de réalisation, la première extrémité 8 du support 2 présente au moins une excroissance 16. Dans l'exemple de la figure 1, le support 2 comporte deux excroissances 16. Une excroissance est formée par le même matériau que le matériau utilisé pour former le support 2. Cette excroissance débouche de la tranche formée par l'épaisseur du support 2 au niveau de la première extrémité 8. Dans cet exemple de réalisation, l'excroissance 16 s'étend dans un plan parallèle au plan de la première face 6 qui reçoit l'élément chauffant 12. Au surplus, le plan de l'excroissance 16 et le plan du support 2 peuvent être confondus.

On notera que l'élément chauffant est également sérigraphié sur l'excroissance 16 sous la forme d'au moins une borne d'alimentation 17. L'excroissance ainsi sérigraphié est un contact ou une cosse pour alimenter en électricité l'élément chauffant 12 et permet ainsi de raccorder électriquement le module chauffant, ainsi que le radiateur constitué par une pluralité de modules chauffants, soit directement via un connecteur appartenant au réseau électrique du véhicule, soit par l'intermédiaire d'un module de commande moulé ou surmoulé sur le radiateur et faisant partie intégrante de ce dernier. Chaque élément chauffant sérigraphié 12 comprend au moins deux bornes d'alimentation 17 sérigraphiées chacune sur une excroissance 16 distincte.

Dans une autre variante de l'invention, le support 2 ne comporte pas d'excroissance et c'est la première extrémité 8 qui joue le rôle de borne de connexion électrique.

Entre l'élément chauffant 12 et la première face 6 du support 2 est prévue une couche diélectrique primaire qui interdit un court-circuit électrique de l'élément chauffant sérigraphié 12, notamment entre ses deux bornes d'alimentation 17. Cette couche diélectrique primaire présente une épaisseur totale comprise entre 0,07 et 0,150 mm, cette couche pouvant résulter d'une multiplicité de couches vitrifiées les unes après les autres chacune d'une épaisseur comprise entre 0,015 et 0,050 mm. Cette couche diélectrique primaire trouve une application particulière dans le cas où le support 2 est conducteur d'électricité.

Une fois que l'élément chauffant 12 est sérigraphié sur le support 2, il est prévu une couche diélectrique secondaire qui couvre au moins l'élément chauffant sérigraphié 12 et avantageusement toute la première face 6 du support 2 servant de support à la piste de l'élément chauffant sérigraphié. Son épaisseur est comprise entre 0,015 et 0,050 mm et plusieurs couches vitrifiées les unes après les autres peuvent se superposer pour atteindre une épaisseur totale comprise entre 0,07 et 0,150 mm.

La sérigraphie de l'élément chauffant 12 sur la première face 6 du support 2 est pratiquée comme suit :
- on dépose une couche diélectrique primaire sur la face du support qui reçoit l'élément chauffant sérigraphié 12,
- on vitrifie la couche diélectrique primaire, par exemple par passage dans un four,
- on dépose la piste résistive de l'élément chauffant sérigraphié 12 sur la face du support ayant reçu la couche diélectrique primaire, par exemple à l'aide d'un masque délimitant la forme de la piste,
- on solidifie la piste résistive de l'élément chauffant sérigraphié 12, par exemple en la cuisant par passage dans un four,
- on dépose une couche diélectrique secondaire au moins sur l'élément chauffant sérigraphié 12 et avantageusement sur toute la première face 6 ou sur l'intégralité du support 2
- on vitrifie la couche diélectrique secondaire, par exemple par passage dans un four.

Les étapes de dépose et vitrification des couches diélectrique ainsi que l'étape de dépose de la piste résistive de l'élément chauffant sérigraphié 12 peuvent être répétées en vue d'atteindre la puissance de chauffage requise ou une protection diélectrique et/ou mécanique suffisante,

Le matériau constitutif de l'élément chauffant sérigraphié 12 contient de l'Argent ou une combinaison d'Argent et de Palladium et sa puissance peut atteindre 75 Watts au cm². Dans une alternative, le matériau constitutif de l'élément chauffant sérigraphié présente des propriétés CTP où une autorégulation intervient au niveau de l'élément chauffant sérigraphié entre sa température et l'intensité du courant qui le parcourt.

Un dissipateur 18 fait partie du module chauffant selon l'invention, Ce dissipateur 18 ou intercalaire d'échange thermique augmente la surface d'échange thermique avec le flux d'air. Il présente par exemple une forme en zig-zag avec une multiplicité de plats 19. Chaque plat 19 est joint au plat adjacent par un pli ou crête 20. Dans l'exemple de réalisation des figures 1 et 2, le dissipateur comprend des crêtes internes 20 et des crêtes externes 24, les crêtes internes 20 étant solidarisées sur la seconde face 7 du support 2 avantageusement par soudage ou brasage. Ceci est particulièrement avantageux car cette opération de brasage est réalisée après l'opération de sérigraphie. En effet, la piste résistive de l'élément chauffant 12 résiste à la température nécessaire au brasage du dissipateur 18 sur le support 2.

Dans une version améliorée du dissipateur 18, les plats 19 comportent des persiennes (non représentées) qui imposent un changement de direction du flux quanq ce dernier traverse le dissipateur, ce qui augmente encore l'échange thermique.

Les figures 3 et 4 montrent un deuxième exemple de réalisation du module chauffant 1 couvert par l'invention, Les éléments identiques à la première variante ne sont pas décrits à nouveau et on se reportera à la description ci-dessus pour comprendre leur structure et organisation.

La figure 3 montre le module chauffant 1 équipé de deux dissipateurs 18. Un premier dissipateur 18a est solidarisé par exemple par brasage, collage ou sertissage sur la seconde face 7 du support 2 alors qu'un second dissipateur 18b est solidarisé, par exemple par brasage, collage ou sertissage, sur la première face 6 qui comporte déjà l'élément chauffant 12. Pour permettre ce soudage ou brasage du second dissipateur 18b sur la première face 6 du support 2, l'élément chauffant présente un profil crénelé.

La figure 4 montre ce profil formé par une pluralité de « U » joint chacun par une bande, le tout formant la piste résistive de l'élément chauffant sérigraphié 12. Le profil crénelé libère des zones 21 de la première face 6 qui se situent chacune à l'intérieur du « U » formé par le profil. Ces zones 21 s'étendent perpendiculairement au premier bord 10, c'est-à-dire parallèlement à la direction du flux d'air illustré par les flèches 4 et 5. Les crêtes internes 20 et externes 24 du second dissipateur 18b s'étendent elles aussi dans une direction parallèle à la direction du flux d'air. Ainsi, les zones 21 forment chacune une zone d'appui ou de contact où une crête est solidarisée, par exemple brasée, collée ou sertie, Cette organisation permet d'une part de souder ou braser le dissipateur sur la face qui reçoit déjà l'élément chauffant sans endommager ce dernier et d'autre part de favoriser le transfert thermique entre la piste résistive, le support et le dissipateur car le profil crénelé, en particulier chaque branche 13 du « U », est immédiatement adjacent avec une crête interne 20. On comprend ainsi que la crête 20, et éventuellement la bande ou le feuillard formant le dissipateur, est conformée pour se positionner dans la zone 21 délimitée par les branches 13 et la base 14 du « U ».

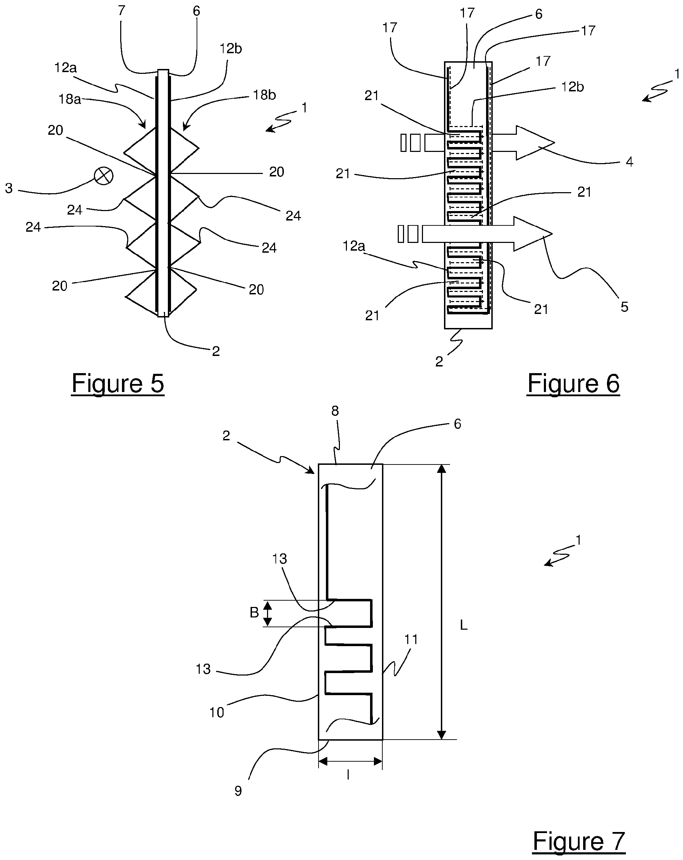

Les figures 5 et 6 montrent un troisième exemple de réalisation du module chauffant couvert par l'invention. Les éléments identiques à la première ou deuxième variante ne seront pas décrits à nouveau et on se reportera à la description ci-dessus pour comprendre leur structure et organisation.

La particularité de cette troisième variante réside dans la présence de deux éléments chauffants 12a et 12b sérigraphié respectivement sur la première face 6 et sur la deuxième face 7. Ces deux éléments chauffants sérigraphiés 12a et 12b présentent tous deux un profil crénelé pour définir les zones 21 sur lesquelles les crêtes internes 20 des dissipateurs 18a et 18b sont solidarisées.

La figure 6 illustre un premier élément chauffant 12a en trait fort sérigraphié sur la première face 6 alors qu'un deuxième élément chauffant 12b est illustré en trait interrompu comme étant sérigraphié sur la seconde face 7. Les deux éléments chauffants sérigraphiés 12a et 12b peuvent être décalés l'un par rapport à l'autre de sorte que les branches 13 du profil crénelé en « U » d'un des éléments chauffants sérigraphiés 12b s'étendent dans les zones 21 définies par le profil crénelé de l'autre élément chauffant sérigraphié. Bien entendu, chaque élément chauffant sérigraphié 12a et 12b présente ses bornes d'alimentation électrique 17.

La figure 7 montre certaines dimensions du module chauffant 1. En pratique, le support 2 est fabriqué à partir d'un feuillard métallique et ce support présente les dimensions suivantes :
- longueur L du support comprise entre 50 et 300 mm, cette longueur correspondant à la distance qui sépare la première extrémité 8 de la seconde extrémité 9,
- largeur I comprise entre 8 et 60 mm, cette largeur correspondant à la distance qui sépare le premier bord 10 du second bord 11,
- épaisseur comprise entre 0,5 et 3 mm, cette épaisseur correspondant à la distance qui sépare la première face 6 de la seconde face 7.

Le profil crénelé présente quant à lui une distance B comprise entre 1,5 mm et 5 mm, cette distance B étant mesurée entre les deux branches 13 formant le profil crénelé.

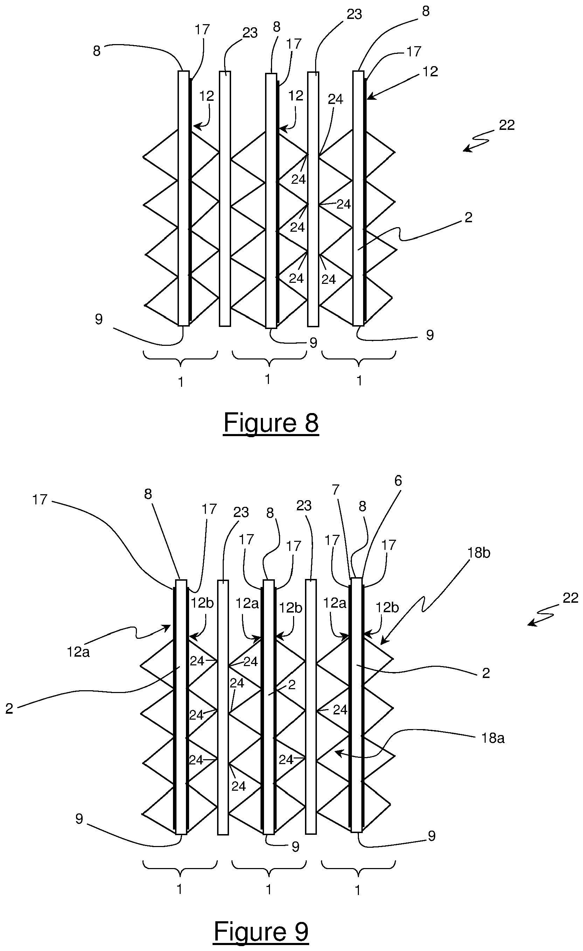

La figure 8 montre un exemple de réalisation d'un bloc de chauffe 22 équipant un radiateur électrique de chauffage d'une Installation de ventilation et chauffage de véhicule automobile. Ce bloc de chauffe 22 est constitué d'une pluralité de modules chauffants 1. Dans cette exemple, les modules chauffants sont construits selon la deuxième variante mais il va de soi que le bloc de chauffe peut comprendre des modules chauffants selon la première ou la troisième variante, ou encore une combinaison de modules chauffants selon l'une quelconque de la première, deuxième ou troisième variante.

Dans cet exemple de réalisation, une plaque intercalaire 23 est installée entre chaque module chauffant 1. Cette plaque intercalaire 23 sert d'appui pour que les crêtes externes 24 soient en contact et puissent être brasées, collées ou serties.

La figure 9 illustre un exemple de réalisation d'un bloc de chauffe 22 équipé de modules chauffants 1 selon la troisième variante. Ainsi, chaque module chauffant 1 comprend d'une part une piste résistive constituant un élément chauffant 12 sérigraphié sur chaque face 6 et 7 du support 2 et d'autre part deux dissipateurs 18a et 18b solidarisés respectivement sur la première et la deuxième face 6 et 7. Comme pour l'exemple de la figure 8, une plaque intercalaire 23 est installée entre chaque module chauffant 1. Cette plaque intercalaire 23 sert d'appui pour que les crêtes externes 24 soient en contact et puissent être brasées.

L'ensemble des modules chauffants 1 et des plaques intercalaire 23 du bloc de chauffe montrés aux figures 8 et 9 est maintenu en position puis brasé en une seule opération de brasage lors d'un passage au four de brasage.

Le bloc de chauffe 22 ainsi constitué équipe un radiateur électrique de chauffage. Les premières extrémités 8 peuvent recevoir un socle (non représenté) moulé ou surmoulé sur ces dernières. Ce socle présente une fonction d'accostage et de centrage du radiateur quand celui-ci est installé dans le boîtier d'une installation de ventilation et chauffage. Ce socle sert aussi de moyen de fixation pour solidariser un connecteur équipé de ses câbles d'alimentation électrique, ce connecteur faisant par exemple parti du réseau électrique du véhicule, Le socle comprend des points de fixation qui permettent de fixer mécaniquement le connecteur sur le socle pour éviter tout mouvement relatif entre le socle et le connecteur nuisible aux connexions électriques.

Alternativement, Le bloc de chauffe 22 ainsi constitué reçoit, au niveau des premières extrémités 8 où s'étendent les bornes d'alimentation électrique 17, un module de commande dont la fonction est de gérer le fonctionnement de chaque élément chauffant 12. Ce module de commande reçoit l'alimentation électrique en provenance du réseau du véhicule pour fournir la puissance électrique nécessaire au fonctionnement des éléments chauffants sérigraphiés 12 ainsi qu'un signal de commande, par l'intermédiaire d'un réseau multiplexé du véhicule tel que le CAN ou le LIN. La fourniture de cette puissance électrique est placée sous la dépendance d'un circuit de contrôle intégré au module de commande, ce circuit de contrôle recevant le signal et mettant en oeuvre la stratégie de pilotage des éléments chauffants sérigraphiés 12. En pratique, ce circuit de contrôle prend la forme d'un circuit imprimé supportant les composants électroniques requis pour mettre en oeuvre la stratégie de pilotage.

A titre d'exemple, la deuxième extrémité 9 comprend un talon (non représenté) dont la fonction est d'assurer l'accostage et l'installation du radiateur électrique de chauffage équipé d'un tel bloc de chauffe dans le boîtier de l'installation de ventilation et chauffage. Ce talon est fabriqué en un matériau plastique et est avantageusement moulé ou surmoulé sur la deuxième extrémité 9 de sorte à garantir une liaison mécanique fiable entre le talon et le bloc de chauffe 22.

Un moyen de détection de la température de l'élément chauffant sérigraphié est solidarisé sur le support 2. Plus particulièrement, ce moyen de détection de la température est fixé sur les faces 6 ou 7 du support 2 qui reçoit l'élément chauffant sérigraphié 12. Ce moyen de détection de la température est installé directement adjacent à une piste résistive formant l'élément chauffant sérigraphié en étant par exemple collé sur la première face 6 du support 2. Le moyen de détection est relié électriquement avec le module de commande et ce dernier prend en compte cette information de température dans la stratégie de pilotage des éléments chauffants sérigraphié 12, Le bloc de chauffe peut comporter autant de moyen de détection de la température que d'élément chauffant de sorte à ajuster au mieux le contrôle de l'élément chauffant concerné. Ce moyen de détection prend par exemple la forme d'un capteur NTC.

## Revendications

1. Module chauffant (1) pour radiateur électrique de chauffage équipant une installation de ventilation, chauffage et/ou climatisation d'un véhicule automobile, traversé par un flux d'air d'une installation de ventilation et chauffage, comprenant au moins un support (2) présentant une première face (6) qui s'étend dans un plan parallèle à une direction du flux d'air et sur laquelle est installé un élément chauffant (12), ledit module (1) comprenant en outre au moins un dissipateur (18), **caractérisé en ce que** l'élément chauffant (12) est sérigraphié sur ladite première face (6), et le dissipateur (18) est solidarisé sur la première face (6) du support (2) qui reçoit l'élément chauffant sérigraphié (12).

2. Module chauffant selon la revendication 1, dans lequel le support (2) est de forme rectangulaire, sa longueur (L) étant comprise entre 50 et 300 mm, sa largeur (I) étant comprise entre 8 et 60 mm et son épaisseur étant comprise entre 0,5 et 3 mm.

3. Module chauffant selon l'une des revendications 1 ou 2, dans lequel l'élément chauffant sérigraphié (12) prend la forme d'une piste résistive d'épaisseur comprise entre 0,05 et 0,20 mm.

4. Module chauffant selon la revendication 3, dans lequel la piste suit un profil crénelé.

5. Module chauffant selon l'une quelconque des revendications 3 ou 4, dans lequel le support (2) présente une première extrémité (8) et une seconde extrémité (9), l'une de ces extrémités recevant au moins une borne d'alimentation (17) de l'élément chauffant sérigraphié (12).

6. Module chauffant selon la revendication 5, dans lequel la borne d'alimentation (17) prend la forme d'une extrémité de la piste.

7. Module chauffant selon l'une quelconque des revendications 5 à 6, dans lequel l'une des extrémités du support (2) prend la forme d'une excroissance (16) sur laquelle est sérigraphié la borne d'alimentation (17) de l'élément chauffant sérigraphié (12).

8. Module chauffant selon l'une quelconque des revendications 1 à 7, dans laquelle un premier dissipateur (18a) est solidarisé sur la première face (6) du support (2) qui reçoit l'élément chauffant sérigraphié (12), un second dissipateur (18b) étant solidarisé sur une seconde face (7) du support (2).

9. Module chauffant selon l'une quelconque des revendications précédentes, dans lequel la première face (6) et la seconde face (7) reçoivent chacune un élément chauffant sérigraphié (12).

10. Module chauffant selon l'une quelconque des revendications précédentes, dans lequel le premier (18a) et/ou le second dissipateur (18b) est brasé, collé ou serti sur le support (2) en des zones (21) dépourvues d'éléments chauffants sérigraphiés (12).

11. Bloc de chauffe (22) d'un radiateur électrique de chauffage équipant une installation de ventilation, chauffage et/ou climatisation d'un véhicule automobile, traversé par un flux d'air d'une installation de ventilation et chauffage, **caractérisé en ce qu'**il comprend une pluralité de modules chauffants (1) selon l'une quelconque des revendications précédentes.

12. Radiateur électrique de chauffage équipant une installation de ventilation,. chauffage et/ou climatisation d'un véhicule automobile, traversé par un flux d'air d'une installation de ventilation et chauffage comprenant un bloc de chauffe (22) selon la revendication 11.

## Patentansprüche

1. Heizmodul (1) für einen zur Ausstattung einer Lüftungs-, Heizungs- und/oder Klimatisierungsanlage eines Kraftfahrzeugs gehörenden elektrischen Heizkörper, der von einem Luftstrom einer Lüftungs- und Heizungsanlage durchquert wird, das mindestens einen Träger (2) enthält, der eine erste Seite (6) aufweist, die sich in einer Ebene parallel zu einer Richtung des Luftstroms erstreckt und auf der ein Heizelement (12) eingebaut ist, wobei das Modul (1) außerdem mindestens einen Ableiter (18) enthält, **dadurch gekennzeichnet, dass** das Heizelement (12) auf die erste Seite (6) siebgedruckt und der Ableiter (18) fest mit der ersten Seite (6) des Trägers (2) verbunden ist, die das siebgedruckte Heizelement (12) aufnimmt.

2. Heizmodul nach Anspruch 1, wobei der Träger (2) eine rechtwinklige Form hat, wobei seine Länge (L) zwischen 50 und 300 mm, seine Breite (1) zwischen 8 und 60 mm und seine Dicke zwischen 0,5 und 3 mm liegt.

3. Heizmodul nach einem der Ansprüche 1 oder 2, wobei das siebgedruckte Heizelement (12) die Form einer Widerstandsbahn einer Dicke annimmt, die zwischen 0,05 und 0,20 mm liegt.

4. Heizmodul nach Anspruch 3, wobei die Bahn einem gezackten Profil folgt.

5. Heizmodul nach einem der Ansprüche 3 oder 4, wobei der Träger (2) ein erstes Ende (8) und ein zweites Ende (9) aufweist, wobei eines dieser Enden mindestens eine Anschlussklemme (17) des siebgedruckten Heizelements (12) aufnimmt.

6. Heizmodul nach Anspruch 5, wobei die Anschlussklemme (17) die Form eines Endes der Bahn annimmt.

7. Heizmodul nach einem der Ansprüche 5 bis 6, wobei eines der Enden des Trägers (2) die Form einer Ausstülpung (16) annimmt, auf die die Anschlussklemme (17) des siebgedruckten Heizelements (12) siebgedruckt ist.

8. Heizmodul nach einem der Ansprüche 1 bis 7, wobei ein erster Ableiter (18a) fest mit der ersten Seite (6) des Trägers (2) verbunden ist, die das siebgedruckte Heizelement (12) aufnimmt, wobei ein zweiter Ableiter (18b) fest mit einer zweiten Seite (7) des Trägers (2) verbunden ist.

9. Heizmodul nach einem der vorhergehenden Ansprüche, wobei die erste Seite (6) und die zweite Seite (7) je ein siebgedrucktes Heizelement (12) aufnehmen.

10. Heizmodul nach einem der vorhergehenden Ansprüche, wobei der erste (18a) und/oder der zweite Ableiter (18b) auf den Träger (2) in Bereichen (21) ohne siebgedruckte Heizelemente (12) gelötet, geklebt oder eingepasst ist.

11. Heizblock (22) eines zur Ausstattung einer Lüftungs-, Heizungs- und/oder Klimaanlage eines Kraftfahrzeugs gehörenden elektrischen Heizkörpers, der von einem Luftstrom einer Lüftungs- und Heizungsanlage durchquert wird, **dadurch gekennzeichnet, dass** er eine Vielzahl von Heizmodulen (1) nach einem der vorhergehenden Ansprüche enthält.

12. Elektrischer Heizkörper, der zur Ausstattung einer Lüftungs-, Heizungs- und/oder Klimaanlage eines Kraftfahrzeugs gehört, der von einem Luftstrom einer Lüftungs- und Heizungsanlage durchquert wird, der einen Heizblock (22) nach Anspruch 11 enthält.

## Claims

1. Heating module (1) for an electric heater with which a motor vehicle heating, ventilation and/or air conditioning installation is equipped, through which there passes an air flow of a heating and ventilation installation, comprising at least one support (2) having a first face (6) which extends in a plane parallel to a direction of the air flow and on which a heating element (12) is installed, the said module (1) further comprising at least one dissipater (18), **characterized in that** the heating element (12) is screen printed onto the said first face (6) and the dissipater (18) is secured to the first face (6) of the support (2) which accepts the screen-printed element (12).

2. Heating module according to Claim 1, in which the support (2) is of rectangular shape, its length (L) being comprised between 50 and 300 mm, its width (1) being comprised between 8 and 60 mm and its thickness being comprised between 0.5 and 3 mm.

3. Heating module according to one of Claims 1 and 2, in which the screen-printed heating element (12) takes the form of a resistive track with a thickness comprised between 0.05 and 0.20 mm.

4. Heating module according to Claim 3, in which the track follows a crenelated profile.

5. Heating module according to either one of Claims 3 and 4, in which the support (2) has a first end (8) and a second end (9), one of these ends receiving at least one power supply terminal (17) of the screen-printed heating element (12).

6. Heating module according to Claim 5, in which the power supply terminal (17) takes the form of an end of the track.

7. Heating module according to either one of Claims 5 and 6, in which one of the ends of the support (2) takes the form of a protrusion (16) on which the power supply terminal (17) of the screen-printed heating element (12) is screen printed.

8. Heating module according to any one of Claims 1 to 7, in which a first dissipater (18a) is secured to the first face (6) of the support (2) which receives the screen-printed heating element (12), a second dissipater (18b) being secured to a second face (7) of the support (2).

9. Heating module according to any one of the preceding claims, in which the first face (6) and the second face (7) each receive a screen-printed heating element (12).

10. Heating module according to any one of the preceding claims, in which the first (18a) and/or the second (18b) dissipater is brazed, bonded or crimped on to the support (2) at regions (21) that do not have screen-printed heating elements (12).

11. Heater unit (22) of an electric heater with which a motor vehicle heating, ventilation and/or air conditioning installation is equipped, through which there passes an air flow of a heating and ventilation installation, **characterized in that** it comprises a plurality of heating modules (1) according to any one of the preceding claims.

12. Electric heater with which a motor vehicle heating, ventilation and/or air conditioning installation is equipped, through which there passes an air flow of a heating and ventilation installation comprising a heater unit (22) according to Claim 11.
